# EUROPEAN PATENT APPLICATION

(11) **EP 3 343 526 A1**
(43) Date of publication of application: **04.07.2018**
(21) Application number: 16830911.0
(22) Date of filing: 07.04.2016
(51) Int. Cl.: G08B 25/10, A44C 9/00

(54) **METHOD OF SIGNALLING DISTRESS IN THE EVENT OF A THREAT TO PERSONAL SAFETY AND DEVICE FOR REALIZING SAID METHOD**

(30) Priority: 24.07.2015 RU 2015130753; 24.07.2015 RU 2015130752
(71) Applicant: Bereshchanskiy, Leonid Mikhailovich, Moscow 115035 (RU); Lobachev, Nikita Olegovich, Moscow 119421 (RU)
(72) Inventor: Bereshchanskiy, Leonid Mikhailovich, Moscow 115035 (RU); Lobachev, Nikita Olegovich, Moscow 119421 (RU)
(74) Representative: Dolgicere, Nina
(86) International application number: PCT/RU2016/000202
(87) International publication number: WO 2017/018908

(57) **Abstract**

The invention relates to the art of personally alerting designated parties in the event of an emergency. The present method of signalling distress in the event of a threat to personal safety consists in using an application program of a user's mobile computerized communication device in order to program a processor in a ring or signet ring which can be worn on a user's finger, equipped with a unit for transmitting a signal when a button on said ring or signet ring is pressed. In the event of signs of a threat to personal safety, the button is pressed to activate the processor in order to generate a distress signal, and said signal is transmitted to the mobile computerized communication device located in a remotely accessible location, from which, in a re-translation mode, the distress signal is transmitted to a party invested with the function of ensuring the safety of the user. To activate the processor and signal transmission unit in order that a distress signal is generated, the button on the ring or signet ring is pressed and is kept in a pressed state for a number of seconds, whereupon the processor generates a signal and transmits same to the signal transmission unit for dispatch to said party.

## Description

### Field of Invention

The present invention relates to the field of personal informing of certain subjects of an emergency, sending of alarm signal to these subjects, appeal for help and location of person in need of help.

### Prior Art

Technical solutions in the field of design of alarm devices located on the human body including those in the form of a ring or a finger-ring which are made with function of secret sending of signals for assistance and location to responding services or other persons are known in the prior art. The patents also describe features of embodiment of this device in the simplified diagram using processor, means of signal transmission over a distance and alarm button.

Thus, warning methods and devices are known which use so called "alarm button" that is a small radio transmitter with control button on the body. The radio transmitter is activated by pressing the control button in case of danger to human life, health and material valuables, in particular in case of threat to the employee of the relevant uniformed service. The radio signal (radio alarm signal) sent with "alarm button" is received in the centralized guard point and is generated as an alarm message after processing and decoding indicating identification signs of "alarm button" that sent radio alarm signal. Sound and/or light alarm is used in case of indication of alarm message in the specified centralized guard points. In particular, different options of devices for technical implementation of this method are presented in Application US No. 2001/0052848, G08B21/00 and patent US No. 6310539, G08B23/00.

The disadvantages of this technical solution include small coverage of "alarm button" and lack of information on location of radio signal source in the radio alarm signal. Moreover, in case of sudden attack the user may fail to use this warning device.

In addition, there are known personal threat warning devices made in the form of a ring or a finger-ring, i.e. in the form of comfortably and permanently worn item that does not raise attacker's previously formed negative attitude or suspicions (US2008182547, H04M11/04, pubd. on 31.07.2008). This solution was taken as the prior art for the claimed device.

This patent describes personal threat warning device comprising a body made in the form of a circular element worn on a user's finger, an internal cavity whereof accommodates a power supply, processor unit, microphone and unit of signal transmission through wireless communication to an externally located receiver of this signal - a mobile phone which is connected in the forwarding mode with a subject assuring user security as well as a button which is installed outside the body for initiation of generation of said signal representing a user personal threat warning signal, in case of voice message sending through microphone to processor unit.

The feature of embodiment of these rings or finger-rings is that alarm button is always located on the external face of product to be pressed by either finger of another hand or by resting upon any object. The known analogous solutions and prior art have one major disadvantage that is unavailability to send alarm signal and location instantly, for example, in case of hand motions limitation.

Moreover, arrangement architecture of such device provides that all the elements are mounted on one common board incorporated into the body. In this case one ring is replaced completely with new one or board is dismantled and new one is installed in case of failure. Generally, such architecture is used for single-use products or for products which service life is determined with a time period prior to the first failure. It makes economic sense for manufacturer since it results in increase of merchandise turnover and replaceability but it is not advantageous for consumer.

The product reliability and durability are important for user and these parameters are determined not only with reliability of installed components but with their interinfluence during the operation. It is particularly important when assemblies, for example, processor and vibrating motor different in design and functions are used. In this regard spaced architecture is preferable since it allows spacing of these assemblies with features different in design and functions at a certain distance, in this case their interinfluence is excluded or, at least, reduced.

In case of emergencies a person cannot inform of need for help and his/her location. Most people feel concern about their friends and family when they are not with them. Nowadays people rely on a mobile phone and active self-defense means. All the current methods of informing that a person needs for help have one common and major disadvantage that is unavailability to send alarm signal and location instantly, for example, in case of hand motions limitation. (In an emergency it is not possible to find phone and any pendants in the bag, pocket or things and use quickly and promptly and a second hand is required to perform an action for use of alarm button on the watch or bracelet that may be impossible in some cases).

Method of personal threat warning is known from the same source (US2008182547), this method consists of a mobile computerized communication device registration of identification data of ring or finger-ring worn on the user's finger and equipped with processor unit, microphone and unit of signal transmission through wireless communication by pressing the physical button on this ring or finger-ring and in case signs of personal threat can be identified the physical button is pressed to initiate the processor unit, microphone and signal transmission unit, then voice message is sent through microphone on the ring or finger-ring and transmitted in wireless communication mode to a mobile device, wherefrom the personal threat signal is transmitted in the forwarding mode to a subject provided with the functions of assurance of user security. This solution was taken as the prior art for the claimed method.

The disadvantage of this method is that both user's hands are required for transmission of alarm signal. Moreover, it is impossible to cancel call in case of false triggering. Voice message use is also a troublesome matter since it is not always possible due to circumstances of the situation and for microphone operation it is necessary to put a ring to the lips that is impossible in some cases and in case of offset distance from the lips it is necessary to raise voice that is also not always practicable.

Moreover, the user is not informed of sent alarm signal or operating device. In case of difficult situation of possible threat.

### Summary

The present invention is aimed at achievement of the technical result ensuring improvement of comfortable use by providing the possibility to send an alarm signal and location with one finger motion even in case of hand motions limitation and without voice messages and possibility of false call cancellation.

Said technical result for device is achieved in such a manner that in a personal threat warning device comprising a body made in the form of a ring or finger-ring worn on a user's finger with an internal power supply, a processor and a signal transmission unit through wireless communications to an externally located receiver of this signal, as well as a physical button installed outside the body for initiation of generation of said signal representing a user personal threat warning signal, characterized in that the physical button is installed outside the body on the external face thereof in the segment of the second and third quadrant in the clockwise direction, the power supply is located at the top of the body, above which the processor, the signal transmission unit and the antenna are located, one side of which accommodates a vibrating motor for sending vibration signals when holding the physical button down, and the other side accommodates said button.

Moreover, this device can be additionally equipped with a positioning unit connected to a processor unit for transmission of a user personal threat warning and location data in the signal packet. Or it can be additionally equipped with a unit of signal reception from a mobile computerized communication device for entering a signal on cancellation of sending of a signal, which is user's personal threat warning signal. A unit working according to the Bluetooth protocols is used as the signal transmission unit.

Moreover, the device can be additionally equipped with at least one LED installed on the internal surface of the ring or finger-ring shank for visual indication of an operation mode of the device. Also the device can be additionally equipped with unit of communication with the geolocation system to form a location signal and transmit it to a signal transmission unit with antenna.

The disadvantage of prior art is eliminated in such a manner that the claimed device owing to a form factor of ring (finger-ring) and convenient location of alarm button allows alarm signal and location sending with one finger motion, even if person's hand motions are limited.

Said technical result for method is achieved in such a manner that in a method of personal threat warning, utilizing an application software installed on a mobile computerized communication device to program a processor of a ring or a finger-ring worn on a user's finger which is equipped with the unit of signal transmission through wireless communication when pressing the physical button on this ring or finger-ring, and in case signs of personal threat can be identified the physical button is pressed to initiate the processor as well as signal transmission unit and form a signal which is the personal threat warning signal, and transmit this signal through wireless communication to the mobile computerized communication device available remotely, wherefrom the personal threat signal is transmitted in the forwarding mode to a subject provided with the functions of assurance of user security, to initiate the processor and signal transmission unit to form a personal threat warning signal, the physical button on the ring or finger-ring is pressed and held down for N seconds, after which the processor unit forms and transmits a signal to the signal transmission unit to send it to the set subject, in case of false pressing on the physical button during the time exceeding N seconds the user cancels the call by entering the password in the application software installed on his/her mobile device.

It enhances reliability of the protection method and increases chances of a person for rescue in an emergency.

Said features are essential and related to formation of the steady combination of essential features sufficient for achievement of the necessary technical result.

### Description of Drawings

The present invention is explained by the specific embodiment which, however, is not the only one possible, but illustrates the possibility of achievement of the necessary technical result.
Fig. 1 shows section of the finger-ring to present an arrangement of elements;
Fig. 2 shows another view of the finger-ring arrangement under Fig. 1;
Fig. 3 shows the second embodiment of the finger-ring;
Fig. 4 shows another view of the finger-ring under Fig. 3;
Fig. 5 shows the third embodiment of the finger-ring;
Fig. 6 shows another view of the finger-ring under Fig. 5;
Fig. 7 shows a block diagram of a device electric circuit.

### Preferred Embodiments

The present invention provides the structure of the personal threat warning device worn on a hand of a user. This device informs certain subjects of an emergency, in which a person needs help.

In general the personal threat warning device comprises a body made in the form of a ring or a finger-ring worn on a user's finger, an internal cavity of whereof accommodates a power supply, a programmable processor and a unit of signal transmission through wireless communication to an externally located receiver of this signal, and a physical button installed outside the body for initiating generation of said signal representing a user personal threat warning signal.

The physical button for initiating generation of the signal representing a user personal threat warning signal is installed outside on an internal surface of a shank of the ring or finger-ring on a segment of the second and third quadrants in the clockwise direction.

The power source is located at the top of the body, one side of which accommodates a vibrating motor with its control board for sending vibration signals when pressing the physical button for initiating signal generation and while holding it down, as well as a power supply charge control board, and the other side of which accommodates a board with a processor unit and a signal transmission unit with an antenna, whereby the processor unit is made with a function of initiation of signal transmission to a signal transmission unit upon deactivating the vibration motor.

Moreover, this device can be additionally equipped with the positioning unit connected to the processor unit for transmission of a signal packet representing the user personal threat warning signal and location data. Or it can be additionally equipped with a unit of signal reception from a mobile computerized communication device for entering a signal on cancellation of sending of a signal, which is the user personal threat warning signal. A unit operating on the basis of the Bluetooth protocol is used as the signal transmission unit.

Moreover, the device can be additionally equipped with at least one LED installed on the internal surface of the ring or finger-ring shank for visual indication of an operation mode of the device. Also the device can be additionally equipped with unit of communication with the geolocation system to form and transmit a location signal to the signal transmission unit with the antenna.

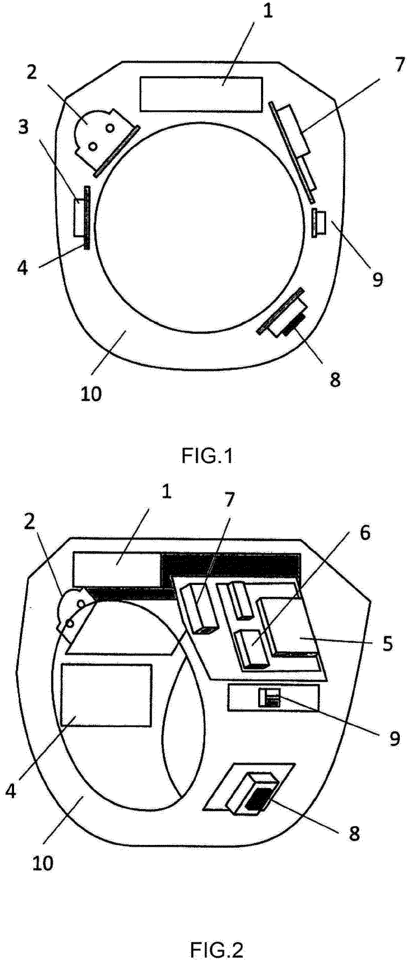

The worn electronic device is a ring (finger-ring) with an alarm physical button (Fig. 1 and 2).

The inner layout scheme of the device is located at its top. The button, pressing whereon alarm signal sending is initiated, is located at the bottom portion of the device on an outer radius of the finger-ring and on the side face if the finger-ring is viewed as a clock dial, so that the button may be located within the range from 3 to 9 o'clock in clockwise direction.

The worn electronic device may be linked with any smartphone through wireless connection and using an application on this smartphone. The worn electronic device may be completely standalone by comprising components for positioning (GPS, GLONASS, etc.) and for communication signals transmission (GSM, CDMA, etc.).

The body of this device can be made of any known material.

The device comprises, but is not limited by the following layout scheme: power supply (battery) 1, vibrating motor 2, power supply charge control board 3, vibrating motor control board 4, processor unit 5, Bluetooth signal transmission unit 6, antenna 7 for Bluetooth unit 6, physical button 8, LEDs 9 (for visualization of ongoing processes are output to the internal side of the ring or finger-ring shank), body of the product 10.

All operations are powered by the battery. When physical button 8 is held down, for example, for three seconds, vibrating motor 2, in case it communicates with vibrating motor control board 4 and processor unit 5, keeps vibrating during the entire period of holding down of button 8. At the end of, for example, three seconds, Bluetooth unit 5 detects this set period has expired and sends a signal through unit 6 to a linked mobile device using antenna 7 for further set scripting.

At the same time, LED 9 may indicate system health. At least one LED installed on the internal surface of a circular element near physical button 8 is used in this device.

The feature of the claimed invention is that the alarm button is located on the internal (in the bottom portion of the ring) surface of the product on the shank, what allows to send the alarm signal and his/her location by a movement of a finger even if person's hand motions are limited. For this purposes it is enough for the user to press the ring down with another finger until sinking the button in or to press the fingers together.

Another feature of this design is that as to the physical alarm button located on the ring worn on a finger, to send an alarm signal a user needs to hold down the button for N seconds (in this case the worn electronic device will vibrate indicating that a user is going to send an alarm signal). As to the electronic alarm button, a user shall also hold it down for N seconds. In case of false pressing a user has N seconds to cancel the alarm signal through an application software by entering his/her personal secret password.

This is a program algorithm expressed in the form of a function canceling false pressing.

Moreover, arrangement architecture of the known finger-rings and rings provides an electronic part made in the form of a monoblock unit, which can be inserted into a mortise of the finger-ring. A spaced arrangement is used in the utility model, what means that each element of the electronic part is located in a prescribed mortise on a flexible board and can be separated from the other, dismounted and replaced.

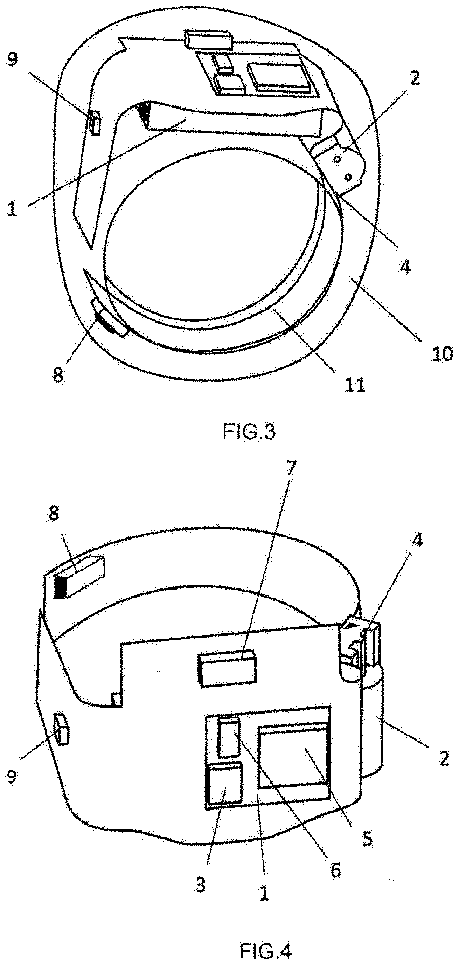

This device can be developed in another arrangement embodiment presented on Fig. 3 and 4.

In general and optionally (Fig. 3 and 4) the personal threat warning device comprises body 10 made in the form of the ring or finger-ring worn on a user's finger, an internal cavity of whereof accommodates power supply 1, processor unit 5 and unit 6 of Bluetooth signal transmission through wireless communication to an externally located receiver of this signal, and physical button 8 installed outside the body for initiating generation of said signal representing the user personal threat warning signal.

Button 8 for initiating generation of the signal representing the user personal threat warning signal is installed on the external surface of the circular element on the second and third quadrants segment in the clockwise direction. The same side (the button side) accommodates the LED indicator (LEDs 9) for light indication of operation modes of the ring or finger-ring.

The electronic components are mounted on flexible board 11 built into the cavity of the circular element, power supply 1 is located at the top of the body of the circular element and on the internal surface of this shank.

The reverse side of the shank in relation to the power supply accommodates a board with the processor unit and signal transmission unit, as well as antenna 7 (antenna 7 for Bluetooth unit 6) for the signal transmission unit, the LED indicator is located on one side of said board, and vibrating motor for sending vibration signals when pressing the button for initiation signal generation and while holding it down is located on the other side of said board. As for the rest this variant redoubles the first example of embodiment.

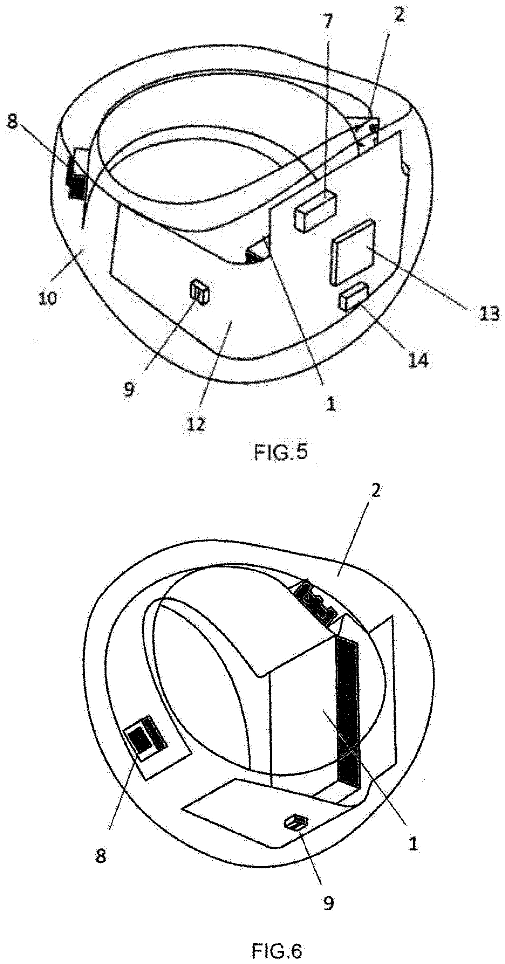

It is possible to make the embodiment of the invention, in which the processor and the unit of signal transmission through wireless communication shall be made in the form of a microprocessor board representing a single-chip Bluetooth controller with a built-in processor performing the functions of the processor and the unit of signal transmission through the antenna (Fig. 5 and 6).

In this solution, as well as in those considered earlier, the button for initiating generation of the signal representing the user personal threat warning signal is installed on the external surface of the circular element on the second and third quadrants segment in the clockwise direction. The same side (the button side) accommodates the LED indicator(s) for light indication of operation modes of the ring or finger-ring.

Electronic components are mounted on a flexible stripe-shaped board built into the circular element cavity, the power supply is located at the top of the circular element body on the internal surface of this flexible board, the reverse side whereof in relation to the power supply accommodates a microprocessor board representing a single-chip Bluetooth controller with a built-in processor performing functions of a processor and a signal transmission unit, a memory unit for this controller and an antenna, at least one LED indicator is located on one side of said board, and a vibrating motor for sending vibration signals when pressing the button for initiating signal generation and while holding it down is located on the other side of said board, whereby said controller is provided with the function of initiating signal transmission through the antenna upon deactivating the vibrating motor.

Like all the other observed examples, this device can be additionally equipped with positioning unit connected to the controller for transmission of the signal packet representing the user's personal threat warning signal and location data. Or it can be additionally equipped with a unit of signal reception from a mobile computerized communication device for entering a signal on cancellation of sending of a signal, which is the user personal threat warning signal.

The worn electronic device is a ring (finger-ring) with an alarm button (Fig. 5 and 6).

Inner layout scheme of the device is mounted on a flexible stripe-shaped board going through the body of a ring or a finger-ring (not only this flexible board is the elementary item for holding electronic components, but it is also a system of conductors for connection of all components in accordance with the wiring diagram). The button, pressing whereon alarm signal sending is initiated, is located in the lower part of the device on the external (outer) face of the finger-ring body and on the side face if the finger-ring is viewed as a clock dial, so that the button may be located within the range from 3 to 9 o'clock in clockwise direction.

The worn electronic device may be linked with any smartphone through wireless connection.

The worn electronic device may be completely standalone by comprising components (units) for positioning (GPS, GLONASS, etc.) and units for transmission of signals through communication protocols for communication signals transmission (GSM, CDMA, etc.).

The device under Fig. 5 and 6 comprises, but is not limited by the following layout scheme: battery 1, vibrating motor 2 with the control board thereof, flexible stripe-shaped board 12, microprocessor Bluetooth module 13, antenna 7 for Bluetooth module, physical button 8, LEDs 9 (LED indicator for visualization of ongoing processes is output to the outer side of the ring or finger-ring), body 10, as well as memory unit 14 for Bluetooth module 13. Microprocessor Bluetooth module 13 means, for example, CC2540 Bluetooth chip which is a single-chip Bluetooth controller with a built-in processor serving as a processor and signal transmission unit. Or, for example, AT76C551 which is a single-chip controller designed to arrange high-speed short distance data transmission through a radio channel within permitted ISM radio frequency band. AT76C551 comprises a radio frequency processor. This processor performs all processing of digital stream including modulation and demodulation according to Bluetooth standard. The device controls the transceiver and pre-determined voice cofidec. AT76C551 comprises ARM7TDMI microprocessor core that supports operation with external and internal storage through the microprocessor interface.

All operations are powered by battery 1. When physical button 8 is held down for three seconds vibrating motor 2, in case it communicates with the vibrating motor control board and Bluetooth 13, keeps vibrating during the entire period of holding down of button 8.

Three seconds later Bluetooth module 13 detects this set period has expired and sends a signal through said Bluetooth module to a linked mobile device using antenna 7 for further set scripting.

At the same time, LED 9 may indicate system health.

The claimed invention is also featured by the alarm signal that may be sent directly to a subject selected by a user, or this alarm signal may be sent to certain subjects along with user's location using any communication system (GSM, CDMA, Wi-Fi, WIMAX, Bluetooth, etc.) or through other computerized communication means located nearby and serving as forwarders for the device.

Usage of such finger-ring or a ring makes it possible to implement the personal threat warning method. This method includes programming of the processor of a ring or a finger-ring worn on the user's finger and equipped with the wireless communication signal transmission unit by using the application software of a mobile computerized communication device of the user by pressing the physical button. In case signs of personal threat can be identified the physical button is pressed to initiate the processor unit and signal transmission unit to form a signal which is the personal threat warning signal, and to transmit it through wireless communication to the mobile computerized communication device available remotely, wherefrom the personal threat signal is transmitted in the forwarding mode to a subject provided with the functions of assurance of user security. To initiate the processor and signal transmission units to form a personal threat warning signal, the physical button on the ring or finger-ring is pressed and held down for N seconds after which the processor unit forms and transmits a signal to the signal transmission unit to send it to the set subject who, upon receipt of said signal, makes a phone call to the user's mobile communication means to receive confirmation of personal threat existence.

In case of false pressing of the physical button during the time exceeding N seconds the user cancels call by entering the password in the application installed in his/her mobile device. A person in an emergency and in need of help may use smartphone software and/or a special worn electronic device (for example, a finger-ring) to send an alarm signal and his/her location to certain subjects.

In particular, these subjects may be represented, but not limited by:
- relatives, friends, family members,
- state security services,
- private security organizations,
- people located within the configurable radius of 0 to 2,000 meters from the user who pressed the button,
- members of hobby publics within a network system a person is the member of It is also implied that after signing in a network system a person may join pre-determined groups or groups created by users themselves. User groups may be classified according to various signs. For example: graduates of some university, co-workers, motorcyclists, residents of some neighborhood, national diasporas and so on.

User may individually pre-determine (selection may be done preliminarily in smartphone software) to whom the alarm signal and his/her location shall be sent when the alarm button is pressed in the smartphone program (soft button) and/or on the worn electronic device (for example, a finger-ring) (hard button).

As to trusted subjects, their confirmation will be required to add them to the user list of trusted subjects.

An alarm signal along with the user's location may be sent to certain subjects using any communication system (GSM, CDMA, Wi-Fi, WIMAX, Bluetooth, etc.).

As to private security organizations, the alarm signal will be sent to the nearest rapid response team connected to our system. Call check will be obligatory for the rapid response team. Network system means software for mobile devices (Apple iOS, Google Android, Microsoft Windows Mobile operating systems, etc.), a web version and server side for further scripting.

When an electronic alarm button in mobile software or a physical alarm button located on the electronic device connected to this system is pressed, alarm signal and location of the signal sender is sent to certain subjects.

As to the physical alarm button located on the worn electronic device (for example, a finger-ring), to send an alarm signal a user needs to hold down the button for N seconds (in this case the worn electronic device will vibrate indicating that a user is going to send an alarm signal). As to the electronic alarm button, a user shall also hold it down for N seconds.

The following script is performed after this:
In case of false pressing a user has N seconds to cancel the alarm signal through an application by entering his/her personal secret password. If no cancellation was initiated, the alarm signal with the user's location is sent to pre-determined subjects (one, several or all subjects may be selected):
- To trusted subjects through a text message and to a mobile application.
- To the police.
- To private security organizations.
- To people located within the configurable radius of 0 to 2,000 meters from the user who pressed the button.
- To members of hobby publics within a network system the person is the member of.

One embodiment stipulates that, after sending a signal to the police, a user receives a call to his/her phone for situation clarification. If there is no response to the call, a police squad is sent to the user's location. The second embodiment stipulates that the police receives a digital signal with the user's location and sends a squad to him/her.

Upon receipt of an alarm signal respective recipients of the signal may track the user's movement on a map until the alarm signal is over (the alarm signal recipients will be able to see the alarm call card containing detailed information on the call: location at the moment of the call initiation, displacement route (if available) of the user who initiated the call, his/her current location, other responding subjects' response status, chat for coordination of the responding subjects' actions, etc.).

The user may cancel or end the call at any time by entering his/her secret password.

In case the user is forced to enter his/her password he/she may enter a second password upon entering of which the application will stop indicating alarm, but the police, rapid response team and trusted subjects will still go to the rescue.

The algorithm of functioning of the personal threat warning device is given below.

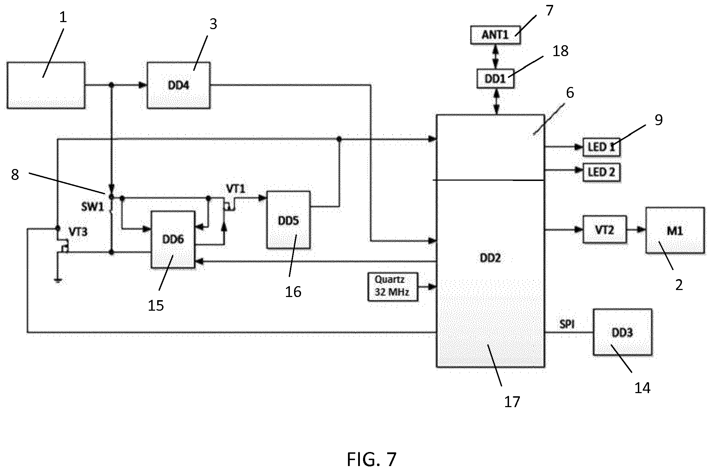

The devices works in two modes: the standby and the alarm mode (Fig. 7).

The 1^{st} mode is the Standby Mode:
The device stays in a shutdown condition all the basic time.
1). At an interval of N seconds DD6 timer chip 15 provides power for the remaining part of battery 1 chip through DD5 voltage stabilizer 16 using VT1 switching transistor.
2). When power is supplied, the main BT controller starts (microprocessor Bluetooth module 13) (DD2 17).
3). DD2 controller 17 informs the user about the start by short-time starting M1 drive of vibrating motor 2 through VT2 switching transistor and light indication by means of LED1 and LED2 9.
4). First of all, by means of VT3 transistor circuit, DD2 BT controller 17 checks if SW1 physical button 8 was pressed, i.e. the controller checks the condition upon which start was initiated:
   - on button pressing, which means it is necessary to work in the Alarm Mode
   - on simple timer, which means it is necessary to work in the Standby Mode.
5). In the Standby Mode DD2 BT controller 17 reads settings from DD3 memory chip (memory unit 14) after the button status check and applies them.
6). After this operation DD2 BT controller 17 reads the battery status data from DD4 chip (the chip of charge control board 3).
7). If necessary, DD2 BT controller 17 switches on and sets a radio frequency route (Bluetooth) for communication with the user device and for transmission of settings and telemetry information. Information transmission is performed through DD1 matching device 18 and ANT1 antenna 7.
8). Upon completion of said operations DD2 BT controller 17 sends a command for switching off of the device to DD6 timer chip 15. Having received this command DD6 chip 15 switches off power supply of the entire chip through VT1 switching transistor.

The operations described above are repeated at set interval of N. This interval may be changed within the range of 100 milliseconds to 2 hours.

The 2^{nd} mode is the Alarm Mode:
Switching on of the device is performed when alarm button 8 is pressed by user.
1). When SW1 button 8 connected to DD6 timer chip 17 is pressed DD6 chip 15 provides power for the remaining part of battery 1 chip through DD5 voltage stabilizer 16 using VT1 switching transistor.
2). When power is supplied, main DD2 BT controller 17 starts.
3). DD2 BT controller 17 informs the user about the start by short-time starting M1 drive through VT2 switching transistor and light indication by means of LEDs 9.
4). First of all, by means of VT3 transistor circuit, DD2 BT controller 17 checks if SW1 physical button 9 was pressed. Since SW1 button 9 was pressed the device switches to the Alarm Mode.
5). The device waits for K seconds (adjustable) and checks if SW1 button 8 was pressed again.
5). If the condition is met, DD2 BT controller 17 switches on and sets a radio frequency route (Bluetooth) for communication with the user device. It also switches on indication. And it writes to DD3 memory chip (memory unit 14).
6). When the radio frequency route is set transmission of an alarm message to the user device is performed, and the latter sends it to server. Message transmission is performed through DD1 matching device 18 and ANT1 antenna 7.
7). On command from the user device the ring may switch back to the standby mode canceling the alarm mode. Upon receipt of said command DD2 BT controller 17 sends a signal for switching off of the device to DD6 timer chip 15. DD6 chip 15 switches off power supply of the entire chip through VT1 switching transistor.

### Industrial Applicability

This invention is industrially applicable and may be manufactured using the known technologies applied for manufacture of radio-transmitting communication means.

## Claims

**1.** A personal threat warning device comprising a body made in the form of a ring or a finger-ring worn on a user's finger with an internal power supply, a processor and a unit of signal transmission through wireless communication to an externally located receiver of this signal, as well as a physical button installed outside the body for initiation of generation of said signal representing a user personal threat warning signal, **characterized in that** the physical button is installed outside the body on the external face thereof in the segment of the second and third quadrants in the clockwise direction, the power supply is located at the top of the body, above which the processor, the signal transmission unit and the antenna are located, one side of which accommodates a vibrating motor for sending vibration signals when holding the physical button down, and the other side accommodates said button, whereas the processor is made with the function of initiating signal transmission to the signal transmission unit upon deactivating the vibration motor.

**2.** The device according to claim 1, **characterized in that** it is additionally equipped with a positioning unit connected to a processor unit for transmission of a user personal threat warning and location data in the signal packet.

**3.** The device according to claim 1, **characterized in that** it can be additionally equipped with a unit of signal reception from a mobile computerized communication device for entering a signal on cancellation of sending of a signal, which is the user personal threat warning signal.

**4.** The device according to claim 1, **characterized in that** it is additionally equipped with at least one LED installed on the external surface of a shank of a ring or a finger-ring.

**5.** The device according to claim 1, **characterized in that** it is additionally equipped with a unit of communication with the geolocation system to form a location signal and transmit it to the signal transmission unit with the antenna.

**7.** The device according to claim 1, **characterized in that** the processor and the unit of signal transmission through wireless communication are made in the form of a microprocessor board representing a single-chip Bluetooth controller with a built-in processor performing the functions of the processor and the unit of signal transmission through the antenna.

**8.** A method of personal threat warning, utilizing an application software software installed on a mobile computerized communication device of the user to program a processor of a ring or a finger-ring worn on a user's finger which is equipped with the unit of signal transmission through wireless communication when pressing the physical button on this ring or finger-ring, and in case signs of personal threat can be identified, the physical button is pressed to initiate the processor and form a signal which is the personal threat warning signal, and transmit this signal through wireless communication to the mobile computerized communication device available remotely, wherefrom the personal threat signal is transmitted in the forwarding mode to a subject provided with the functions of assurance of user security, **characterized in that** to initiate the processor and signal transmission unit to form a personal threat warning signal, the physical button on the ring or finger-ring is pressed and held down for N seconds, after which the processor forms and transmits a signal to the signal transmission unit to send it to the set subject, and in case of false pressing on the physical button during the time exceeding N seconds the user cancels the call by entering the password in the application software installed in his/her mobile computerized communication device.
